# EUROPEAN PATENT APPLICATION

(11) **EP 2 404 712 A1**
(43) Date of publication of application: **11.01.2012**
(21) Application number: 10168696.2
(22) Date of filing: 07.07.2010
(51) Int. Cl.: B25J 9/16

(54) **A dual arm robot and a method for controlling a dual arm robot**

(71) Applicant: ABB Research Ltd., 8050 Zürich (CH)
(72) Inventor: Lundberg, Ivan, 722 46, Västerås (SE); Olsson, Tomas, 723 35, Västerås (SE); Klinteskog, Niklas, 722 26, Västerås (SE)
(74) Representative: Reyier, Ann-Mari

(57) **Abstract**

The present invention relates to a dual arm robot comprising a body (1), a first arm (2) attached to the body in a first attachment point (3), a second arm (5) attached to the body in a second attachment point (6), and a controller (10) adapted to control the motions of the arms based on desired positions of the arms. The controller comprises a position correction module (12) for correcting the position of the second arm due to the position and movements of the first arm, and the position correction module is adapted to determine an elastic deformation in the second attachment point based on the force acting on the first attachment point and an elastic model of the body, to determine the change of the position of the second arm based on the determined elastic deformation in the second attachment point, and to correct the position of the second arm based on the determined change of the position of the second arm.

## Description

### FIELD OF THE INVENTION

The present invention relates to a dual arm robot comprising a body, a first arm attached to the body in a first attachment point, a second arm attached to the body in a second attachment point, and a controller adapted to control the motions of the arms based on desired positions of the arms.

The present invention also relates to a method for controlling a dual arm robot.

### PRIOR ART

There exist many different types of dual arm robots. Dual arm robots are used for assembly tasks, for example, for mounting electronic devices, such as mobile phones.

JP2006-35346 discloses a dual arm robot having two arms for performing cooperative operation. The two arms are attached to a common body and are moved independently of each other. The patent application describes an assembly method in which one arm of the dual arm robot is holding one part, and the other arm of the robot performs installation preparation of the other part.

JP2007118177 discloses a dual arm robot having a static base part and a body to which two identical six degrees of freedom serial arms are attached. The body is able to rotate relative the static base part to which it is attached. The robot is intended for assembly tasks, which require cooperative operation of the two arms.

The requirements on accuracy in assembly tasks are very high. A typical requirement on the assembly requirement for consumer electronics, such as mobile phones, is 0,1 mm.

All applications of mechanical and/or mechatronic nature have deflections and deformations inflicted by for example gravity, external loads, dynamic forces etc. Deflections and deformations may interfere and restrict the usage and efficiency of these systems. The control of a dual arm robot is quite challenging due to the presence of dynamic coupling between the two arms, which may cause disturbing vibrations in the arms and body of the robot. This topic is discussed in "Dual-Arm Long-Reach Manipulators: Noncontact Motion Control Strategies" written by A. Gouo, D.N. Nenchev, K. Yoshida, and M. Uchiyama, The IEEE International Conference on Industrial Informatics (INDIN 2008) DCC, Daejeon, Korea July 13-16, 2008. A control method is proposed for dual-arm long-reach manipulators, which reduces the vibrations in the body of the robot. According to the proposed control strategy, only motions such that no vibrations in the base occur are allowed to be used. If one arm is performing a motion, the other arm must perform a motion that counteracts the deformation of the body of the robot. For example, the distance between the end-tip positions of the two arms holding an object is kept constant in order ensure pure translational movements of the object, and accordingly to avoid motions which may causes vibrations. This control strategy avoids deformation of the body of the robot. A disadvantage with this method is that it put restrictions the motions of the robot. This method is difficult to use if both arms are programmed to follow different paths. In such case there is no freedom for one of the arms to perform motions that counteracts the movements of the other arm.

Another problem with a dual arm robot is that it is very difficult to program the robot. To make the programming easier, it is a desire to program one arm at a time. However, in that case the influence of the position of the other arm is not considered. For example, if the robot is programmed by means of teaching, the position of one arm can be programmed with high accuracy, but when the robot is in operation the position and orientation of the programmed position can be changed due to dynamic coupling between the two arms.

### OBJECTS AND SUMMARY OF THE INVENTION

The object of the present invention is to provide a dual arm robot having an improved accuracy.

According to one aspect of the invention, this object is achieved by the method for controlling a dual arm robot as defined in claim 1.

The method comprises;
- determining the force in a first attachment point between the first arm and the body,
- determining the elastic deformation in a second attachment point between the second arm and the body, based on the determined force and an elastic model of the body,
- determining the change of the position of the second arm due to the elastic deformation in the second attachment point, and
- correcting the position of the second arm based on the determined change of the position of the second arm.

The present invention allows deformations of the robot body due to, for example, gravity forces acting on the arms, but compensates for the deformation so that the arm positions are not affected by the deformation of the body. An advantage with the present invention is that it puts no restrictions on the motions of the robot. A further advantage is that the programming of a dual arm robot is facilitated.

Tests have verified that the method according to the invention provides a surprisingly increased accuracy of the dual arm robot. If the body of the dual armed robot is not stiff enough, loads from one arm may cause deflections on amounting flange of the other arm due to the dynamic coupling between the two arms. The influence between the arms may lead to bad repeatability ad accordingly to a reduced accuracy. According to the invention, changes of the position of one of the arms due to the position of the other arm are determined, and the position of the arm is corrected based on the determined changes. The invention provides an active compensation of deflections of the body to make the position, for example the position of the TCP (Tool Centre Point), behave as the body was totally rigid. A further advantage of the invention is that stiffness issues that otherwise would have to be addressed by structural means can be accepted. Thus, the invention makes it possible to reduce the structural complexity of the robot, which leads to reduced costs as well as more design freedom and lower weight.

Another advantage with the present invention is that programming of a dual armed robot is facilitated, since the invention makes it possible to program one arm at a time, without needing to consider the influence of the position and/or movements of the other arm.

The compensation of one arm is based on a determination of the force in the attachment point between the first arm and the body. The force can either be measured or calculated based on the position of the arm. The force in the attachment point depends on the position of the arm, i.e. a static force, as well as the movement of the arm, i.e. a dynamic force. Thus, the method according to the invention can provides a static as well as a dynamic compensation of the arms.

According to an embodiment of the invention, the correction of the position is repeatably performed during operation of the robot in order to ensure an improved accuracy during operation of the robot. However, it is also possible to use the invention during off-line programming assuming that loads are known. Thus, the method can be used for on-line as well as off-line compensation.

The method may further comprise determining the force in the second attachment point, determining the elastic deformation in the first attachment point based on the determined force and said elastic model of the body, determining the change of the position of the first arm due to the elastic deformation in the first attachment point, and correcting the position of the first arm based on the determined change of the position of the first arm. Accordingly, deflections of both arms are compensated.

According to an embodiment of the invention, the method further comprises determining the force in the attachment point of the arm based on the current position of the arm, the mass of the arm and a dynamic model of the arm. In this embodiment the force in the attachment point is calculated based on the position of the arm. Accordingly, no additional measuring equipment, such as force sensors and stain gauges, is needed.

According to an embodiment of the invention, the elastic model of the body includes a plurality of springs positioned at a distance of each other. This type of elastic model makes it easy to calculate the elastic deformation in the attachment point between the arm and the body using the determined force in the attachment point.

The corrected position of the arm can by any operating point of the arm. However, it is advantageous to correct the tool centre point (TCP) of the arm. The robot program includes the position of the TCP. The positions of the TCP defined the programmed path. Since the position of the tool centre point is a part of the programmed path it is easy to correct the tool centre point.

It is easy to realize that the method according to the invention, as defined in the appended set of method claims, is suitable for execution by a computer program having instructions corresponding to the steps in the inventive method when run on a processor unit.

According to a further aspect of the invention, the object is achieved by a computer program product directly loadable into the internal memory of a computer or a processor, comprising software code portions for performing the steps of the method according to the appended set of method claims, when the program is run on a computer. The computer program is provided either on a computer-readable medium or through a network, such as the Internet.

According to another aspect of the invention, the object is achieved by a computer readable medium having a program recorded thereon, when the program is to make a computer perform the steps of the method according to the appended set of method claims, and the program is run on the computer.

According to another aspect of the invention this object is achieved by a dual arm robot as defined in claim 9.

The dual arm robot comprising:
- a body,
- a first arm attached to the body in a first attachment point,
- a second arm attached to the body in a second attachment point, and
- a controller adapted to control the motions of the arms based on desired positions of the arms,
- a controller comprising a position correction module for correcting the position of the second arm due to the position and/or movements of the first arm, and the position correction module is adapted to repeatably determine an elastic deformation in the second attachment point based on the force acting on the first attachment point and an elastic model of the body, determine the change of the position of the second arm based on the determined elastic deformation in the second attachment point, and correct the position of the second arm based on the determined change of the position of the second arm.

Further developments of the device are characterized by the features of the additional claims.

### BRIEF DESCRIPTION OF THE DRAWINGS

The invention will now be explained more closely by the description of different embodiments of the invention and with reference to the appended figures.
- Fig. 1: shows an example of a dual arm robot.
- Fig. 2: shows an example of a simplified spring model set up for the body 1 of the robot shown in figure 1.
- Fig. 3: shows a flow chart illustration of a method for controlling a dual arm robot according to an embodiment of the invention.
- Fig. 4: shows a diagram presentation of test results for deflection of TCP on a dual arm robot using the invention and not using the invention.

### DETAILED DESCRIPTION OF PREFERRED EMBODIMENTS OF THE INVENTION

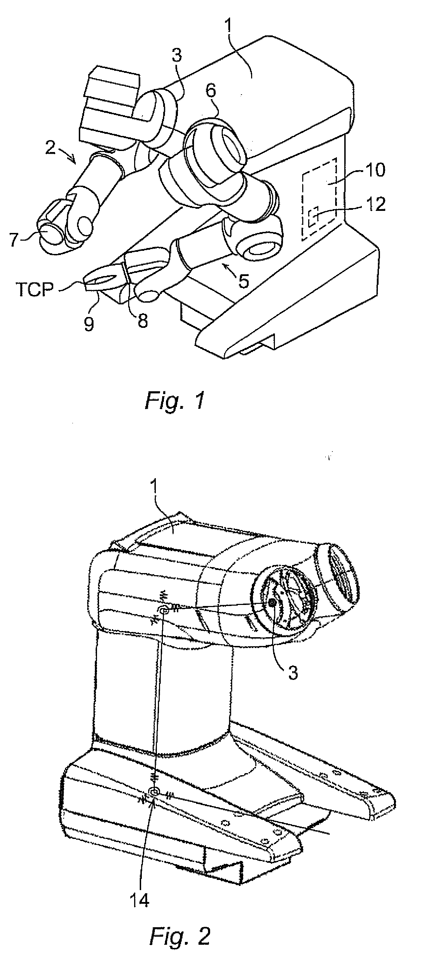

Figure 1 shows an example of a dual arm robot. The robot comprises a body 1 and a first arm 2 rotatably attached to the body in a first attachment point 3, and a second arm 5 rotatably attached to the body in a second attachment point 6. In practice, the attachment point is a line of points or an area. However, to facilitate the computation of the force the attachment area is regarded as a point. The robot shown in figure 1 has a body that is also the base of the robot and is designed to bear on a ground, such as a floor or a table. The invention is also applicable for robots having a body rotatable relative a base part. Each of the arms of the robot is movable relative the body about a rotational axis. The arms 2,5 includes a plurality of arm parts, which are movable relative each other about a plurality of rotational axes. The movements of the rotational axes are driven by motors mounted on each axis. Each of the arms are provided with a tool flange 7,8 designed to attach a tool, for example a gripper 9, in which an operating point, called TCP (tool centre point) is defined.

The robot also includes a robot controller 10 integrated in the body of the robot. The movements of the robot are controlled by the robot controller. The robot controller includes program storage for storing a robot program comprising a series of robot program instructions written in a robot language, and a processor adapted to execute the stored robot program instructions. The speeds and accelerations of the axes of the robot are controlled by the robot controller that generates control signals to the motors. The motors are equipped with angle-measuring devices to provide position feedback signals. The feedback signals from the angle-measuring devices are transferred to the robot controller 10.

The controller 10 comprises a position correction module 12 for correcting the positions of one of both of arms due to the positions and/or movements of the other arm. The position correction module is adapted to repeatably determine an elastic deformation in the second attachment point based on the force acting on the first attachment point and an elastic model of the body, to determine the change of the position of the second arm based on the determined elastic deformation in the second attachment point, and to correct the position of the second arm based on the determined change of the position of the second arm.

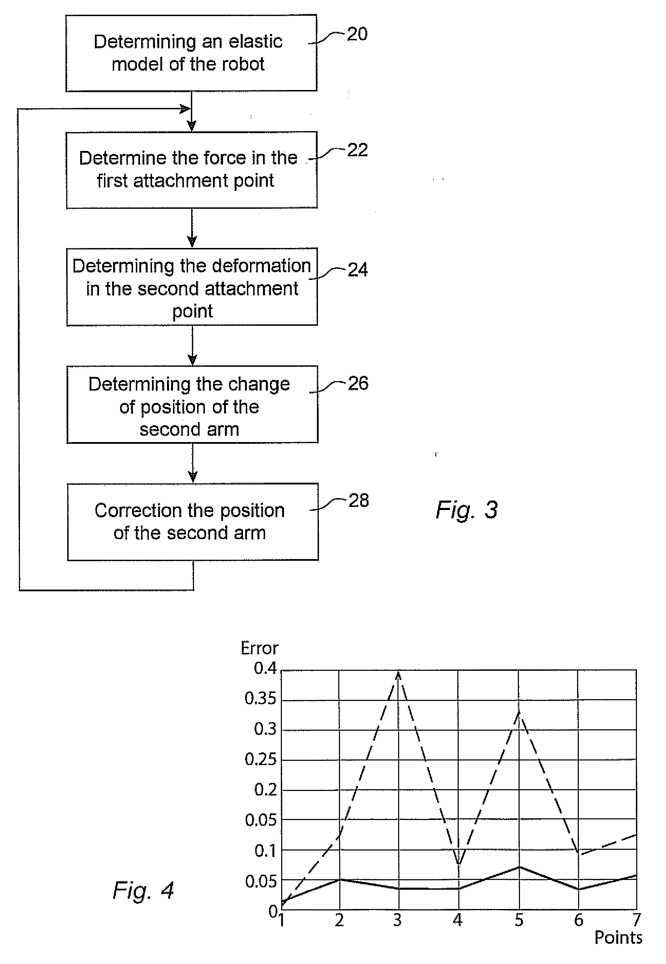

Figure 3 shows a flow chart illustration of a method for controlling a dual arm robot according to an embodiment of the present invention. In a first step 20 an elastic model of the body of the robot is determined. In a preferred embodiment a simplified spring model is set up for the robot body. Figure 2 shows an example of a simplified spring model set up for the body 1 of the robot shown in figure 1. The spring model includes a plurality of rotational springs 14 arranged at a distance from each other. It is decided where on the body the most important bendings are situated and they are represented by springs. The springs have spring constants. The values of the spring constants can be determined based on measurements on the body or by FEM (Finite Element Model) calculations. Alternatively, a simplified FEM model can be used. This step is carried out beforehand. The attachment points 36 are theoretical points used for the calculations of the deflection. Thus, other points than the physical attachment point can be used for the calculation. However, the attachment points used for the calculations must be located close to the physical attachment points.

In a second step 22, the force in the first attachment point 3 between the first arm 2 and the body 1 is determined. This can be done using a force sensor or by calculations. In a preferred embodiment, the force is calculated based on the position of the arm and a dynamic model of the arm including the mass of the parts of the arm. The position of the arm is known by the robot controller. The determined force is a static force on the attachment point due to gravity acting on the first arm as well as a dynamic force due to movements of the first arm. For example, if the attachment point is an area the average force on the area is determined.

In a third step 24, the elastic deformation of the body in the second attachment point 6 is estimated based on the determined force in the first attachment point 3 and the elastic model of the body. The elastic deformation of the attachment point of one of the arms, is the distance the attachment point is moved in the x,y,z directions (the translational deformation) and how much the detachment point is reorientated (the orientation deformation) compared to when there is no force acting on the attachment point of the other arm. In a preferred embodiment, the translational deformations Δx, Δy, Δz in three orthogonal direction are calculated and used for correcting the position of the arm. The orientation deformations of the body in the attachment points are small compare to the translational deformations and therefore it is not always necessary to compensate for them. However, if very high accuracy is needed, the orientation deformations of the body can be calculated as well and compensated for.

In a forth step 26, the change of the position Δd of the second arm 5 due to the elastic deformation in the second attachment point is determined based on the determined elastic deformation. It is the change of the position of a point at or close to the end of the arm that is determined, for example a point on the tool flange 8 or the tool centre point TCP of a tool attached to the arm. The change of the position Δd and orientation of the second arm can be calculated by means of a kinematic model of the arm using the calculated translational and orientation deformation of the attachment point as an input to the kinematic model.

In a fifth step 28, the position, for example the TCP, of the second arm 5 is corrected based on the determined change Δd₁ of the position of the second arm. For example, if the TCP of the second arm is programmed to be moved to a position A, the new position of the TCP is determined as A_{new} = A + Δd₁. The TCP of the second arm is moved to the position A_{new}, instead of to the programmed position A.

If the positions and movements of the arms relative each other as well as loads are known beforehand, the correction of the position of the arm can be done during programming of the robot. Alternatively, the correction can be made during operation of the robot. In this case the steps 22-28 are repeated during operation of the robot.

In some applications, the demand on accuracy is high for one of the hands and lower for the other hand. For instance, the robot holds a workpiece in one hand and performs operations, such as mounting of electronic components, on the work piece with the other hand. In such applications it is enough to only correct the position of the hand that does the mounting. However, in most applications the demand on accuracy is high for both hands.

If it is a desire to achieve high accuracy of both hands, the steps 22 - 28 are repeated for the other hand as well. In that case the method further includes determining the force in the second attachment point 6 between the second arm 5 and the body 1 , determining the elastic deformation in the first attachment point 3 based on the determined force in the second attachment point 6 and the elastic model of the body, determining the change of the position Δd₂ of the first arm 2 due to the elastic deformation in the first attachment point 3, and correcting the position of the first arm based on the determined change of the position of the first arm. For example, if the first arm is programmed to be moved to a position B, the new position of the first arm is determined as B_{new} = B + Δd₂.

The invention can be used to compensate for the position of the other arm, or to compensate for the position of as well as the movements of the other arm. If the compensation is to be done for the position of as well as for the movements of the other arm, the steps of blocks 22 - 28 are repeated with a high frequency during operation of the robot. If the compensation is to be done for the position only, the steps of blocks 22 - 28 can be repeated with a much lower frequency.

It will be understood that each of the blocks 22 - 28 of the flow chart can be implemented by computer program instructions. The program instructions of the method according to the invention can be executed on a processor in the robot controller 10, or on a processor in an external computer. For example, if the robot is programmed off-line by using an off-line programming tool, the program instructions of the method according to the invention can be executed on a processor on the off-line programming tool.

Figure 4 shows a diagram presentation of test results for deflection of TCP of one of the arms on a dual arm robot. During the test one of the arms was standing still in a first position, while the other arm was moved to seven different points. This was first done without any compensation and was then repeated using the correction method according to the invention. The dashed line in the figure shows the deflection error (in mm) of the arm without any correction of the position of the arm, and the continuous line shows the deflection error when using the method for correction according to the invention. As can be seen from the figure, the maximum error due to deflection error is reduced from 0.4mm to 0.07mm, which is 80% reduction of the error.

The present invention is not limited to the embodiments disclosed but may be varied and modified within the scope of the following claims. For example, the method may also include deflection compensation for the table or the floor to which the robot is attached. The method according to the invention can also be used for dynamic damping by adding the compensation according to the invention in each step in the dynamic interpolation of the robot.

## Claims

**1.** A method for controlling a dual arm robot including a body (1), a first arm (2) attached to the body in a first attachment point (3), and a second arm (5) attached to the body in a second attachment point (6), the method comprising:
- determining the force in the first attachment point (3),
- determining the elastic deformation in the second attachment point based on the determined force and an elastic model of the body,
- determining the change of the position of the second arm due to the elastic deformation in the second attachment point, and
- correcting the position of the second arm based on the determined change of the position of the second arm.

**2.** The method according to claim 1, wherein it further comprises:
- determining the force in the second attachment point (6),
- determining the elastic deformation in the first attachment point (3) based on the determined force and said elastic model of the body,
- determining the change of the position of the first arm (2) due to the elastic deformation in the first attachment point, and
- correcting the position of the first arm based on the determined change of the position of the first arm.

**3.** The method according to claim 1 or 2, wherein it further comprises:
- determining the force in the attachment point (3,6) of the arm based on the current position of the arm, the mass of the arm and a dynamic model of the arm.

**4.** The method according to any of the previous claims, wherein said elastic model of the body includes a plurality of springs positioned at a distance of each other.

**5.** The method according to any of the previous claims, wherein said corrected position of the arm is the tool centre point of the arm.

**6.** A computer program product directly loadable into the internal memory of a computer, comprising software for performing the steps of any of the claims 1-5.

**7.** A computer-readable medium, having a program recorded thereon, where the program is to make a computer perform the steps of any of the claims 1-5, when said program is run on the computer.

**9.** A dual arm robot comprising:
- a body (1),
- a first arm (2) attached to the body in a first attachment point (3),
- a second arm (5) attached to the body in a second attachment point (6), and
- a controller (10) adapted to control the motions of the arms based on desired positions of the arms, **characterized in that** the controller comprises a position correction module (12) for correcting the position of the second arm due to the position and/or movements of the first arm, and the position correction module is adapted:
- to determine an elastic deformation in the second attachment point based on the force acting on the first attachment point and an elastic model of the body,
- to determine the change of the position of the second arm based on the determined elastic deformation in the second attachment point, and
- to correct the position of the second arm based on the determined change of the position of the second arm.

**10.** The dual arm robot according to claim 9, wherein the position correction module (12) is adapted:
- to determining the force in the attachment point of the arm based on the current position of the arm, the mass of the arm and a dynamic model of the arm.

**11.** The dual arm robot according to claim 9 or 10, wherein the position correction module (12) is adapted:
- to determine the force in the second attachment point,
- to determine the elastic deformation in the first attachment point based on the determined force and said elastic model of the body,
- to determine the change of the position of the first arm due to the elastic deformation in the second attachment point, and
- to correct the position of the first arm based on the determined change of the position of the first arm.
